# EUROPEAN PATENT APPLICATION

(11) **EP 4 748 708 A1**
(43) Date of publication of application: **27.05.2026**
(21) Application number: 25217079.0
(22) Date of filing: 19.11.2025
(51) Int. Cl.: B64C 13/16, B64D 43/00, B64D 45/00, G05D 1/49, B64F 5/60

(54) **AIRCRAFT MONITORING USING SENSED MOTION AND PREDICTIVE MOTION**

(30) Priority: 25.11.2024 US 202418958447
(71) Applicant: The Boeing Company, Arlington, VA 22202 (US)
(72) Inventor: MCDONALD, DARREN GORDON, Arlington, 22202 (US)
(74) Representative: Lissandrini, Marco

(57) **Abstract**

Method of monitoring motion of an aircraft (100) during flight. The method includes determining sensed motion of the aircraft (100) about an axis during the flight and determining predictive motion of the aircraft (100) about the axis during the flight (based on a digital model (200)). An error is determined based on the sensed motion and the predictive motion. An effector (110) on the aircraft (100) is determined that controls the motion of the aircraft about the axis. The error is converted into an amount of necessary movement of the effector (110) to correct the error.

## Description

### TECHNOLOGICAL FIELD

The present disclosure relates generally to the field of aircraft and, more specifically, to monitoring aircraft based on sensed motion and predictive motion.

### BACKGROUND

Flight testing is a method to gather data about an aircraft indicative of how the aircraft will perform. Flight testing is often performed when little data exists regarding the operation of the aircraft. The flight testing often uses specialized sensors to obtain data about the aircraft. The data is then validated for accuracy and analyzed to identify issues and/or validate the design.

Flight testing can occur at different times for an aircraft. Some flight testing occurs during development to determine if there are issues with the aircraft. The flight testing enables the issues to be identified and corrected during the design phase. Flight testing also occurs once the design of the aircraft is complete and provides for final approval and certification. In some cases, the flight testing occurs on the entire aircraft. Other instances include the flight testing analyzing just one or more systems of the aircraft.

When performing flight testing that involves approaching aircraft limits, awareness of how the aircraft is behaving compared to the predictions is a critical safety element. In order to support this, a lot of effort is put into predictive studies to ensure safe results. The challenge is that during testing, it can be extremely difficult to detect key differences in actual aircraft behavior versus the predicted results. To resolve this, a live model can be driven using aircraft data and the predicted output can be compared to actual results, although this can also be extremely problematic. For example, a live aerodynamic model can produce errors between the predicted versus actual aerodynamic coefficients in each of the six axes, but the severity of the magnitude of those errors is not intuitively obvious to a human operator.

### SUMMARY

One aspect is directed to a method of monitoring motion of an aircraft during flight. The method comprises: determining sensed motion of the aircraft about an axis during the flight; determining predictive motion of the aircraft about the axis during the flight; determining an error based on the sensed motion and the predictive motion; determining an effector on the aircraft that controls the motion of the aircraft about the axis; and converting the error into an amount of necessary movement of the effector to correct the error.

In another aspect, the method further comprises normalizing the movement of the effector relative to a total available movement of the effector.

In another aspect, the method further comprises displaying the percentage on a display within the aircraft during the flight.

In another aspect, the method further comprises determining the error as a difference between the sensed motion and the predictive motion.

In another aspect, wherein determining the error comprises determining that the sensed motion varies from the predictive motion by more than a predetermined threshold.

In another aspect, determining the sensed motion of the aircraft about the axis during the flight comprises determining the sensed motion based on data from sensors on the aircraft.

In another aspect, determining the predictive motion of the aircraft about the axis during the flight comprises determining the predictive motion based on motion calculated using a digital model of the aircraft.

In another aspect, the method further comprises: obtaining data during the flight from sensors on the aircraft; applying the data to the digital model of the aircraft; and determining the predictive motion.

In another aspect, the method further comprises determining the error in real-time during the flight of the aircraft.

In another aspect, the effector is a first effector and further comprising converting the error into a first amount of movement of the first effector and a second amount of movement of a second effector to correct the error.

In another aspect, the method further comprises determining a percentage that the second amount of movement is to a total amount of movement of the second effector.

In another aspect, the error is a first error and the method further comprises after determining the error along the axis, determining a second error of motion along another axis.

In another aspect, the method further comprises determining a total of six errors for six degrees of freedom of the aircraft.

One aspect is directed to a method of monitoring motion of an aircraft during flight. The method comprises: based on data from sensors on the aircraft, determining sensed motion of the aircraft about an axis; based on a digital model of the aircraft, determining predictive motion of the aircraft about the axis; determining a difference between the sensed motion and the predictive motion of the aircraft; and determining an amount of movement of an effector on the aircraft necessary to correct the difference.

In another aspect, the method further comprises calculating the total amount of movement of the effector based on data from sensors on the aircraft with available effector movement being a function of airspeed, altitude, and aircraft state.

In another aspect, the method further comprises normalizing the amount of movement of the effector relative to a total amount of movement of the effector.

In another aspect, the method further comprises displaying a graph corresponding to the amount of movement of the effector on a display within the aircraft during the flight.

In another aspect, the method further comprises determining the effector on the aircraft that controls the motion of the aircraft about the axis.

One aspect is directed to a computing device configured to monitor an aircraft during flight. The computing device comprises processing circuitry, and memory circuitry configured to contain a program that when acted on by the processing circuitry enables the processing circuitry to: determine sensed motion of the aircraft about an axis during the flight; determine predictive motion of the aircraft about the axis during the flight; determine a difference between the sensed motion and the predictive motion; determine an effector on the aircraft that controls the motion of the aircraft about the axis; and determine an amount of necessary movement of the effector 110 to correct the error.

In another aspect, the computing device is positioned on the aircraft.

In another aspect, the processing circuitry is further configured to normalize the amount of necessary movement of the effector to correct the error relative to a total amount of effector movement.

The features, functions and advantages that have been discussed can be achieved independently in various aspects or may be combined in yet other aspects, further details of which can be seen with reference to the following description and the drawings. Nevertheless, the scope of protection is determined by the appended claims.

### BRIEF DESCRIPTION OF THE DRAWINGS

Figure 1 is an isometric diagram of an aircraft.
Figure 2 is a schematic diagram of a method of monitoring an aircraft using both sensed motion and predictive motion.
Figure 3 is a schematic diagram of a graph illustrating a normalized error and that is configured to be displayed on a display.
Figure 4 is a flowchart diagram of a method of monitoring an aircraft.
Figure 5 is a schematic diagram of a computing device that performs the method of monitoring an aircraft.

### DETAILED DESCRIPTION

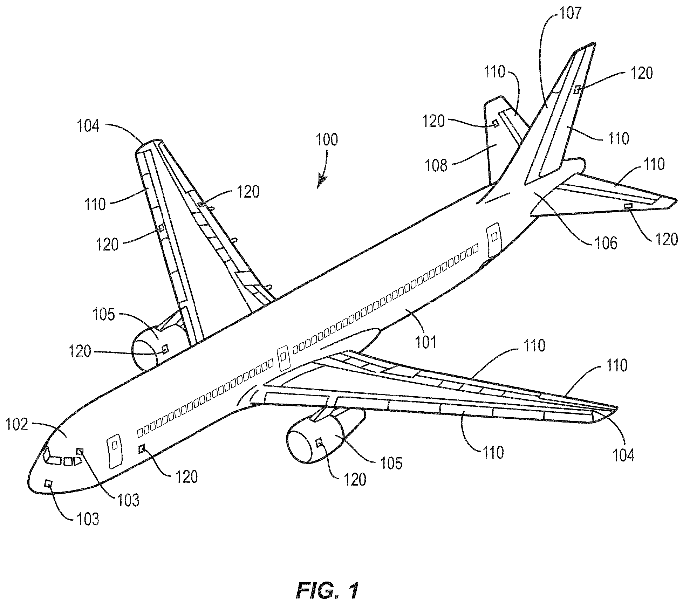

Figure 1 illustrates an aircraft 100 that includes a fuselage 101 with a flight deck 102 at a forward end. Wings 104 extend outward from opposing sides of the fuselage 101. Engines 105 are mounted on the wings 104 to propel the aircraft 100 during flight. A tail 106 is positioned on the rear of the fuselage. The tail 106 includes a vertical stabilizer 107 and horizontal stabilizer 108. Various effectors 110 are positioned on the aircraft 100 to control the flight. Examples of effectors 110 include but are not limited to flaps and ailerons on the wings 104, a rudder on the vertical stabilizer 107, and elevators on the horizontal stabilizers 108.

The flight deck 102 includes control input devices 103 that enable flight personnel to operate the effectors 110. Examples of control input devices 103 include but are not limited to the yoke, pedals, levers, and various switches and knobs that control the activation level and settings of various effectors 110 and components of the aircraft 100. In some examples, the available motion of the effector 110 is a function that is programmed into the control programming of the aircraft 100. Additionally or alternatively, the available motion is a function of a variety of variables, including but not limited to airspeed, altitude, and aircraft state.

During flight, the aircraft 100 can be maneuvered in various axes referred to as degrees of freedom. In some examples such as for fixed-wing aircraft, the aircraft has six movements which are commonly referred to as the 6-axis equations of motion or six degrees of freedom. The motion includes translational motion including longitudinal motion (fore/aft), vertical motion (up/down), and lateral motion (left/right). The motion also includes rotational motion including pitch (pitching moment), roll (rolling moment), and yaw (yawing moment). The effectors 110 are designed to control the aircraft within the 6-axis motion system. Each type of motion is controlled by one or more of the effectors 110. Examples include but are not limited to the lift controlled by the flaps, pitch controlled by the elevators, roll controlled by the ailerons, and yaw controlled by the rudder.

Testing of the aircraft 100 monitors the motion of the aircraft 100 in one or more of the axes. The testing determines both sensed motion and predictive motion along the one or more axes. The testing focuses on the differences between the predictive motion and the sensed motion as a potential issue.

The sensed motion of the aircraft 100 is determined through sensors 120 that are mounted on the aircraft 100. In some examples, the sensors 120 are positioned throughout the aircraft 100 either on exterior or interior components. The sensors 120 can be positioned at fixed locations on the aircraft 100 and/or on positions that move (e.g., on the effectors 110). As an example, a sensor 120 positioned on the wing 104 outputs data indicating a position of an aileron (e.g., up/down).

The sensors 120 are configured to detect a variety of different sensed data. Examples include but are not limited to air or ground speed, altitude, temperature, pressure, pilot controls, translational and rotational inertial movement, Mach number, effector deflections, weight, and center of gravity. In some examples, the sensed data is directly detected by the sensors 120. In some examples, the sensed data is used in calculations to determine additional sensed data. For example, an impact pressure is determined based on total pressure and static pressure, and calibrated airspeed is determined based on impact pressure.

The predictive motion is determined using a digital model of the aircraft 100. In some examples, the digital model 200 is a 3D computer model, such as a computer aided design (CAD) file, SolidWorks ^{®}, or other digital representation. In some examples, the digital model 200 represents the entire aircraft 100. In other examples, the digital model 200 comprises multiple sub-models that correspond to one or more components of the aircraft 100. Examples of sub-models include but are not limited to an aerodynamic sub-model, an engine sub-model, a wing sub-model, and tail sub-model. The digital model is configured to determine the expected motion of the aircraft 100 when operated at various settings. A user is able to input the applicable settings and the digital model 200 enables the output of the expected motion of the aircraft 100 along one or more of the axes. For example, the digital model provides the expected motion of the aircraft 100 along an axis when the aircraft has an airspeed of 180 knots (i.e., about 333,36 km/h), 5 degrees of flap, 10,000 feet (i.e., about 3048 m), and 7 degrees of elevator deflection.

The process monitors the sensed motion and the predictive motion along one or more of the axes. In some examples, the process enables a user to select the desired one or more axes. In other examples, the process monitors each of the axes of the aircraft 100 (e.g., six degrees of freedom for a fixed-wing aircraft, nine degrees of freedom for a helicopter). The monitoring may be continuous at a predetermined frequency or may occur after a change in one or more of the operational settings of the aircraft 100 (e.g., increase in airspeed, change in one or more of the control input devices 103). The monitoring compares the sensed motion against the predictive motion. An error occurs when there is a discrepancy between the two motions. That is, the predictive motion which is the expected response of the aircraft 100 is different than the actual motion of the aircraft 100 that is occurring during the flight. The monitoring process also determines a corrective action by the corresponding effector 110 that controls the movement along the motion axis. The corrective action is the amount of movement of the effector 110 that is needed to remove the error. In some examples, the movement along each axis is individually evaluated. In other examples, the process analyzes motion of the aircraft 100 along two or more of the axes.

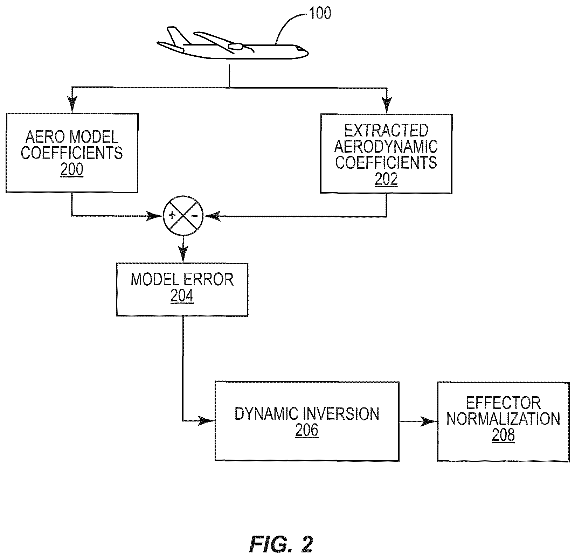

Figure 2 illustrates a flight monitoring process to evaluate an aircraft 100. During the test flight, sensed motion is determined based on readings from the sensors 120 (block 200). The predictive motion is determined based on the digital model 200 (block 202). The sensed and predictive motion is compared and an error in the predictive motion is determined (block 204). In some examples, an error occurs when there is a difference between the two motions. In other examples, an error occurs when the difference between the two motions is more than a predetermined amount (i.e., a difference in motion that is less than the predetermined amount is minimal and not considered an issue for the aircraft 100).

After identifying the error, the process includes dynamic inversion to evaluate the error (block 206). The dynamic inversion equates the motion with the corresponding one or more effectors 110 that control the aircraft 100 along the axis. For example, the pitch of the aircraft 100 is controlled by the elevators, yaw is controlled by the rudder, and roll is controlled by the ailerons. The process also determines the amount of movement of the effector 110 needed to correct the error. For example, if the error indicates a pitching movement error of a positive 5 degrees per second, the amount of movement of the elevators is determined to reduce the pitching movement by 5 degrees per second.

The process further normalizes the effector movement (block 208). The error is normalized as a percentage of required versus available control power of the effector 110 that would be needed to correct the error. The normalization enables a user to determine the severity of the error more readily. For example, a total roll moment error that requires just 5% more aileron travel is not as severe as a roll moment error that requires aileron movement that corresponds to 80% of the total available aileron movement. In the first instance, the 5% change may enable the flight maneuver to continue while the second instance with 80% may require the maneuver to be terminated.

In examples that evaluate a single degree of freedom, the process is repeated for each of the different degrees of freedom that are to be evaluated.

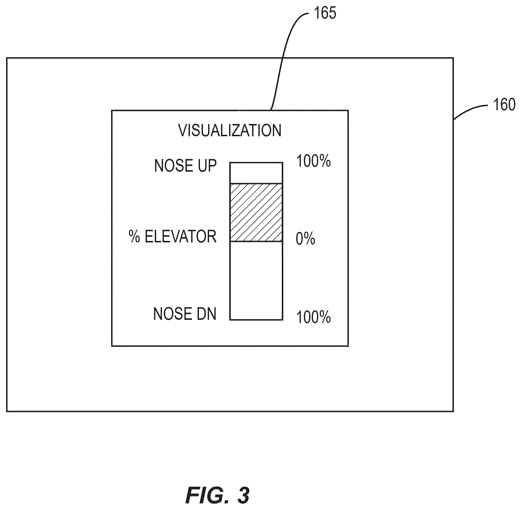

In some examples as illustrated in Figure 3, the normalized movement is output as a graph 165 that is transmitted to and displayed on a display 160. This facilitates situational awareness for the user and enables faster understanding of the severity of the error. In some examples, this information is displayed on a display 160 in the flight deck 102, while in other examples this information is displayed in the fuselage 101. In the example of Figure 3, the graph 165 indicates a significant percentage of about 80% of available movement of the corresponding effector 110 is necessary to address the error. In this specific example, the elevators would be required to move 80% of their total amount of movement to correct the error.

The process highlights the extent of the issue with the aircraft 100 during the flight. When performing flight testing that involves approaching aircraft limits, awareness of how the aircraft 100 is behaving compared to the predictions is a critical safety element. The process detects key differences in actual aircraft behavior versus the predicted results. The normalization of the error highlights the severity of the magnitude of those errors which are often otherwise not intuitively obvious to a user.

The monitoring process occurs in real-time during the flight test. This enables the movement of the aircraft 100 to be monitored during the flight. The various maneuvers are monitored and errors that occur during the flight are identified and evaluated to determine if the maneuver and/or the flight should continue or should be stopped.

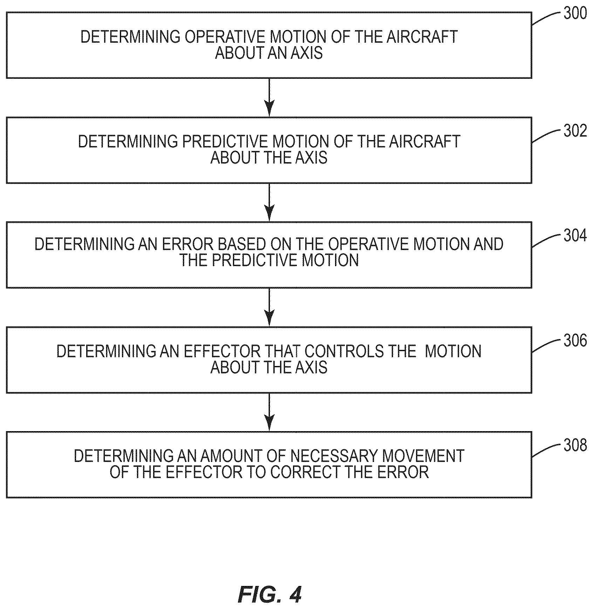

Figure 4 illustrates a method of monitoring motion of an aircraft 100 during flight. The method includes determining operative motion (block 300) and predictive motion (block 302) of the aircraft 100 about an axis during the flight. The motion includes one of the degrees of freedom for the aircraft 100. In an example of a fixed-wing aircraft, the motion includes longitudinal, vertical, and lateral translational motion and pitch, roll, and yaw rotational motion.

An error is determined based on the operative motion and the predictive motion (block 304). The error indicates an issue between the sensed motion of the aircraft 100 and the expected motion of the aircraft 100. In some examples, the error is the difference in motion between the operative and predictive amounts. An effector 110 is determined that controls the movement of the aircraft 100 along the motion axis (block 306). In some examples, each of the six motion axes are controlled by a different effector 110. In other examples, two or more effectors 110 control movement along one or more of the axes. The method determines the amount of movement of the effector 110 that is necessary to correct the error (block 308).

In some examples of aircraft 100 with six degrees of freedom the monitoring maps to the following errors: lift error for delta angle of attack; drag error for delta thrust; side force error for delta lateral acceleration; pitching moment error for delta elevator angle; rolling moment error for delta aileron wheel angle; and yawing moment error for delta rudder angle. The effector 110 that controls the various degrees of freedom may vary in different aircraft.

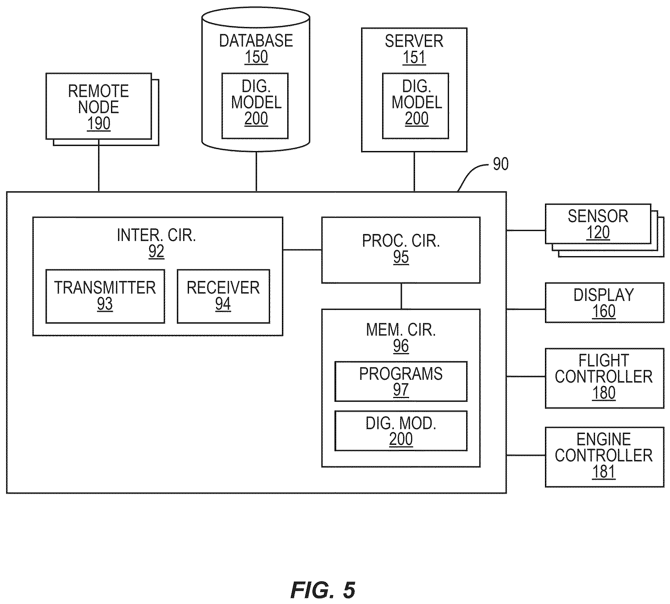

In some examples, a computing device 90 is configured to perform the monitoring processes. Figure 5 illustrates a computing device 90 that includes processing circuitry 95 (e.g., processor unit) connected to a memory circuitry 96 (e.g., storage device). The processing circuitry 95 is composed of one or more processors alone or in combination with one or more memories. The processing circuitry 95 is generally computer hardware that is capable of processing information such as, for example, data, computer programs and/or other suitable electronic information. The processing circuitry 95 is composed of a collection of electronic circuits some of which may be packaged as an integrated circuit or multiple interconnected integrated circuits (an integrated circuit at times more commonly referred to as a "chip"). The processing circuitry 95 may be configured to execute computer programs 97, which may be stored onboard the processing circuitry 95 or otherwise stored in the memory circuitry 96 (of the same or another device).

The processing circuitry 95 may be a number of processors, a multi-core processor or some other type of processor, depending on the particular implementation. Further, the processing circuitry 95 may be implemented using a number of heterogeneous processor systems in which a main processor is present with one or more secondary processors on a single chip. As another illustrative example, the processing circuitry 95 may be a symmetric multi-processor system containing multiple processors of the same type. In yet another example, the processing circuitry 95 may be embodied as or otherwise include one or more ASICs, FPGAs or the like. Thus, although the processing circuitry 95 may be capable of executing a computer program 97 to perform one or more functions, the processing circuitry 95 of various examples may be capable of performing one or more functions without the aid of a computer program 97. In either instance, the processing circuitry 95 may be appropriately programmed to perform functions or operations according to example implementations of the present disclosure.

The memory circuitry 96 is generally computer hardware that is capable of storing information such as, for example, data, computer programs (e.g., computer-readable program code 97) and/or other suitable information either on a temporary basis and/or a permanent basis. The memory circuitry 96 may include volatile and/or non-volatile memory and may be fixed or removable. Examples of suitable memory circuitry 96 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 96 may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

In some examples, the digital model 200 is stored in the memory circuitry 96. In some examples, the digital model 200 is obtained (or equivalently, accessed, received, or the like) from a data store (not shown) or some other suitable source. Examples include but are not limited to one or more databases 150 and servers 151. In some examples, the database 150 is stored in a non-transitory computer readable storage medium (e.g., an electronic, magnetic, optical, electromagnetic, or semiconductor system-based storage device). The database 150 can be local or remote relative to the computing device 90. In some examples, the digital model 200 is stored on the aircraft 100. In other examples, the digital model 200 is remote from the aircraft 100 and accessed by the computing device 90 during use.

In addition to the memory circuitry 96, the processing circuitry 95 may also be connected to one or more interfaces for displaying, transmitting and/or receiving information. The interfaces include a communications interface circuitry 92 configured to transmit and/or receive information within the aircraft 100 such as but not limited to the sensors 120, and to a display 160 positioned within the aircraft 100 such as on the flight deck 102. Communication can also be enabled with one or more other computing devices onboard the aircraft 100 such as but not limited to a flight controller 180 that oversees the operation of the aircraft 100, and an engine controller 181 that oversees the operation of one or more of the engines 105. Communications can also be enabled with one or more remote nodes 190 located off the aircraft 100 such as but not limited to a ground-based controller and various servers. The communications interface circuitry 92 may be configured to transmit and/or receive information by physical (wired) and/or wireless communications links. Examples of suitable communication interfaces include a network interface controller (NIC), wireless NIC (WNIC) or the like. The communications interface circuitry 92 may have one or more transmitters 93. The communications interface circuitry 92 may have one or more receivers 94.

In some examples, the computing device 90 is a stand-alone component configured to monitor the movement of the aircraft 100. In other examples, the computing device 90 is incorporated into one or more other computing devices, such as but not limited the flight controller 180 and the engine controller 181.

In some examples, a single computing device 90 performs each of the various functions to monitor the movement of the aircraft 100. In other examples, the functions are performed by two or more different computing devices. In some examples, a first computing device determines the sensed motion and a second computing device determines the predictive motion. One of the first and second computing devices, or one or more different computing devices determines the error and corrective action of the effector 110.

In some examples, one or more of the computing devices 90 are positioned on the aircraft 100. In other examples, one or more of the computing devices are located remote from the aircraft 100, such as being ground-based or based on another aircraft 100.

The methods of monitoring can be used in a variety of different aircraft 100. Aircraft 100 include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, and combinations thereof. In some examples, the monitoring functionality is particularly applicable for unmanned aircraft due to the lack of situational awareness.

In some examples as illustrated in the fixed wing aircraft of Figure 1, the aircraft enables six degrees of freedom during flight. Other aircraft enable different amounts of freedom. In other examples such as for helicopters and vertical take-off and landing (VTOL) vehicles, these vehicles have nine degrees of freedom. The method and system of the present application are applicable to enable analysis and error detection along the various degrees of freedom.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The scope of protection is determined by the appended claims. Therefore, the present embodiments are to be considered in all respects as illustrative and not restrictive, and all changes coming within the meaning and equivalency range of the appended claims are intended to be embraced therein.

## Claims

1. A method of monitoring motion of an aircraft (100) during flight, the method comprising:
obtaining data during the flight from sensors (120) on the aircraft (100);
based on data from the sensors (120) on the aircraft (100), determining sensed motion of the aircraft (100) about an axis during the flight;
based on a digital model (200) of the aircraft (100), determining predictive motion of the aircraft (100) about the axis during the flight;
determining an error as a difference between the sensed motion and the predictive motion of the aircraft about the axis;
determining an effector (110) on the aircraft (100) that controls the motion of the aircraft (100) about the axis; and
converting the error into an amount of necessary movement of the effector 110 to correct the error.

2. The method of claim 1, further comprising normalizing the movement of the effector (110) relative to a total available amount of movement of the effector (110).

3. The method of claim 1 or 2, further comprising displaying a percentage that the amount of movement of the effector (110) is to a total amount of movement of said effector (110), the displaying being carried out on a display within the aircraft (100) during the flight.

4. The method of any one of claims 1 to 3, wherein determining the error comprises determining that the sensed motion varies from the predictive motion by more than a predetermined threshold.

5. The method of any one of claims 1 to 4, further comprising:
applying the data obtained from the sensors (120) to the digital model (200) of the aircraft (100);
and
determining the predictive motion based on motion calculated using the digital model (200) of the aircraft (100).

6. The method of any one of claims 1 to 5, further comprising determining the error in real-time during the flight of the aircraft (100).

7. The method of any one of claims 1 to 6, wherein the effector (110) is a first effector (110) and further comprising converting the error into a first amount of movement of the first effector (110) and a second amount of movement of a second effector (110) to correct the error.

8. The method of claim 7, further comprising determining a percentage that the second amount of movement is to a total amount of movement of the second effector (110).

9. The method of any one of claims 1 to 8, wherein the error is a first error and the method further comprising:
after determining the first error along an axis, determining a second error of motion along another axis.

10. The method of any one of claims 1 to 9, further comprising determining a total of six errors for six degrees of freedom of the aircraft (100).

11. The method of any one of claims 1 to 10, further comprising using the data obtained from sensors (120) in calculations to determine additional data.

12. The method of any one of claims 1 to 11, wherein obtaining data during the flight from sensors (120) on the aircraft (100) includes detecting one or more of: air or ground speed, altitude, temperature, pressure, pilot controls, translational and rotational inertial movement, Mach, effector deflections, weight, and/or center of gravity.

13. A computing device (90) configured to monitor an aircraft (100) during flight, the computing device (90) comprising:
processing circuitry (95); and
memory circuitry (96) configured to contain a program that when acted on by the processing circuitry (95) enables the processing circuitry (95) to perform a method according to any one of claims 1 to 12.

14. The computing device of claim 13, wherein the computing device (90) is positioned on the aircraft (100).

15. The computing device (90) of claim 14, wherein the processing circuitry (95) is configured to at least one of:
communicating with a flight controller (180) onboard the aircraft (100); and/or
communicating with an engine controller (181) onboard the aircraft (100).
